# EUROPÄISCHE PATENTSCHRIFT

(11) **EP 2 558 225 B1**
(45) Veröffentlichungstag und Bekanntmachung des Hinweises auf die Patenterteilung: **22.10.2014**
(21) Anmeldenummer: 10714255.6
(22) Anmeldetag: 15.04.2010
(51) Int. Cl.: B08B 3/02, G01F 23/24

(54) **DAMPFREINIGUNGSGERÄT**
STEAM CLEANER
DISPOSITIF DE NETTOYAGE A VAPEUR

(43) Veröffentlichungstag der Anmeldung: 20.02.2013
(73) Patentinhaber: Alfred Kärcher GmbH & Co. KG, 71364 Winnenden (DE)
(72) Erfinder: SCHMIDGALL, Martin, 71546 Aspach (DE); DEUTSCHER, Daniel, 71397 Leutenbach (DE); DUX, Tobias, 73614 Schorndorf (DE)
(74) Vertreter: Hoeger, Stellrecht & Partner Patentanwälte
(86) Internationale Anmeldenummer: PCT/EP2010/054950
(87) Internationale Veröffentlichungsnummer: WO 2011/127977

(56) Entgegenhaltungen:
- EP-A2- 1 217 341
- DE-A1- 2 536 822
- DE-A1- 19 507 616
- DE-C1- 4 443 798

## Beschreibung

Die Erfindung betrifft ein Dampfreinigungsgerät mit den Merkmalen des Oberbegriffes von Patentanspruch 1.

Dampfreinigungsgeräte kommen zur Reinigung unterschiedlichster Flächen, insbesondere zur Reinigung von Hartflächen, zum Einsatz. Sie umfassen einen Flüssigkeitstank, der eine Reinigungsflüssigkeit aufnimmt. Als Reinigungsflüssigkeit kommt üblicherweise Wasser zum Einsatz. Die Reinigungsflüssigkeit kann zu einem elektrisch beheizbaren Dampfkessel gepumpt werden. Innerhalb des Dampfkessels wird die Reinigungsflüssigkeit verdampft, und der Dampf kann dann unter Druck auf eine zu reinigende Fläche gerichtet werden.

Die Zuführung von Reinigungsflüssigkeit in den Dampfkessel erfolgt in Abhängigkeit vom Füllstand, den die Flüssigkeit im Dampfkessel einnimmt. Insbesondere kann vorgesehen sein, dass die Pumpe eingeschaltet wird, wenn der Füllstand einen unteren Grenzwert erreicht, und dass die Pumpe ausgeschaltet wird, wenn der Füllstand im Dampfkessel einen oberen Grenzwert erreicht. Der Füllstand wird mittels eines Füllstandssensors erfasst, der im Dampfkessel angeordnet ist und ein Signal bereitstellt zur Steuerung der Pumpe.

Bei derartigen Dampfreinigungsgeräten kann somit bedarfsweise Reinigungsflüssigkeit in den Dampfkessel gepumpt werden. Der Dampfkessel kann daher ein verhältnismäßig geringes Volumen aufweisen. Dies ermöglicht eine Betriebsbereitschaft des Dampfreinigungskessels nach kurzer Aufheizzeit, und der in vielen Fällen aus einem Aluminiummaterial oder aus Edelstahl hergestellte Dampfkessel kann mit reduziertem Materialeinsatz gefertigt werden. Dies wiederum senkt die Herstellungskosten des gesamten Dampfreinigungsgerätes.

Insbesondere verhältnismäßig kleine Dampfkessel haben beim Aufheizen eine hohe Energiekonzentration zur Folge. Dies kann dazu führen, dass die Reinigungsflüssigkeit im Dampfkessel stark sprudelt, d. h. es bilden sich sehr viele Luftblasen, außerdem kann eine beachtliche Menge an Schaum gebildet werden. Dies wiederum kann die Erfassung des Füllstandes mittels des Füllstandssensors erschweren, so dass die Gefahr von Fehlmessungen des Füllstandes besteht.

Aus der EP 1 217 341 A2 ist ein dampfbetriebenes Haushaltsgerät bekannt mit einem Flüssigkeitstank für eine Reinigungsflüssigkeit und mit einem elektrisch beheizbaren Dampfkessel zum Erzeugen von Dampf, der auf eine zu reinigende Fläche aufbringbar ist. Die Flüssigkeit ist mittels einer Pumpe aus dem Flüssigkeitstank in den Dampfkessel förderbar in Abhängigkeit vom Füllstand der Flüssigkeit im Dampfkessel. Der Füllstand ist mittels eines im Dampfkessel angeordneten Füllstandssensors erfassbar. Der Füllstandssensor ist im Dampfkessel von einem Schutzelement in Form einer Hülse umgeben, die zwei Durchlassöffnungen aufweist. Mittels des Schutzelements kann die Gefahr einer Fehlmessung reduziert werden. Der bekannte Dampfkessel weist einen Dampfauslass auf, über den der im Dampfkessel erzeugte Dampf austreten kann. Hierbei besteht allerdings die Gefahr, dass Flüssigkeitströpfchen vom Dampf mitgerissen werden und so ebenfalls aus dem Dampfkessel austreten können.

Aus der DE 44 43 798 C1 ist ein Dampfreinigungsgerät bekannt, dessen Dampfkessel ein Unterteil und ein Oberteil aufweist. Das Unterteil bildet einen Boden aus, in den eine Heizung integriert ist.

Aufgabe der vorliegenden Erfindung ist es, ein Dampfreinigungsgerät der eingangs genannten Art derart weiterzubilden, dass die Gefahr des unbeabsichtigten Austretens von Flüssigkeitströpfchen aus dem Dampfkessel reduziert wird, unter Reduzierung der Gefahr von Fehlmessungen des Füllstandes.

Diese Aufgabe wird durch ein Dampfreinigungsgerät mit den Merkmalen von Patentanspruch 1 gelöst.

Wie bereits erwähnt, kann die Gefahr einer Fehlmessung deutlich reduziert werden, wenn der im Dampfkessel angeordnete Füllstandssensor von einem beispielsweise hülsenförmigen Schutzelement umgeben ist. Das Schutzelement stellt sicher, dass der Füllstandssensor innerhalb des Dampfkessels mit deutlich weniger Luftblasen und Schaum in Kontakt kommt. Damit der Füllstand der Flüssigkeit unmittelbar am Füllstandssensor dasselbe Niveau aufweist wie der Füllstand der Flüssigkeit im restlichen Bereich des Dampfkessels, umfasst das Schutzelement mindestens eine Durchlassöffnung. Über die Durchlassöffnung kann Reinigungsflüssigkeit in den vom Schutzelement umgebenen Raum hinein- und aus diesem hinausströmen und es kann auch ein Druckausgleich erfolgen, indem Luft oder Dampf hinausströmt bzw. hineinströmt.

Gemäß der Erfindung weist das Schutzelement einen Schutzschild auf, der den Dampfauslass des Dampfkessels innenseitig abdeckt.

Der Schutzschild schließt sich bei einer vorteilhaften Ausführungsform der Erfindung an eine Umfangswand des Schutzelementes nach außen an. Er bildet einen Spritzschutz aus, der die Gefahr verringert, dass Flüssigkeitströpfchen vom Dampf in Richtung Dampfauslass mitgerissen werden. Der Dampf kann den Schutzschild innerhalb des Dampfkessels umströmen, wohingegen vom Dampf mitgerissene Flüssigkeitströpfchen am Schutzschild abgeschieden werden.

Von besonderem Vorteil ist es, wenn das Schutzelement mindestens eine erste Durchlassöffnung für Reinigungsflüssigkeit und mindestens eine zweite Durchlassöffnung für Luft oder Dampf aufweist. Eine Anpassung des Füllstands innerhalb des Schutzelements an den Füllstand außerhalb des Schutzelements kann über die mindestens eine erste Durchlassöffnung für Reinigungsflüssigkeit erfolgen, und der für die Anpassung des Füllstands erforderliche Druckausgleich kann über die mindestens eine zweite Durchlassöffnung für Luft oder Dampf erfolgen.

Günstigerweise ist mindestens eine erste Durchlassöffnung für Reinigungsflüssigkeit an einer Seite des Schutzelements angeordnet, die einer Bodenwand des Dampfkessels zugewandt ist.

Mindestens eine zweite Durchlassöffnung für Luft und Dampf ist bevorzugt an einer Seite des Schutzelements angeordnet, die einer Bodenwand des Dampfkessels abgewandt ist.

Günstigerweise nimmt das Schutzelement einen Abstand zum Füllstandssensor ein, d. h. das Füllstandselement liegt nicht etwa unmittelbar am Füllstandssensor an, sondern es umgibt den Füllstandssensor in Umfangsrichtung und vorzugsweise auch in Längsrichtung des Sensors in einem Abstand. Das Schutzelement definiert somit eine Beruhigungszone innerhalb des Dampfkessels. Der Füllstandssensor befindet sich in der Beruhigungszone, in der erheblich weiniger Luftblasen und Schaum vorliegen als außerhalb der Beruhigungszone.

Der Abstand zwischen dem Füllstandssensor und dem Schutzelement beträgt bei einer vorteilhaften Ausgestaltung der Erfindung mindestens ein Zehntel des Durchmessers des vorzugsweise nahezu zylinder- oder kugelförmigen Dampfkessels.

Ein Abstand zwischen dem Füllstandssensor und dem Schutzelement sowohl in Umfangsrichtung als auch in Längsrichtung des Füllstandssensors von mindestens einem Achtel des Durchmessers des Dampfkessels wird bevorzugt.

Das Schutzelement ist günstigerweise zylinderförmig oder auch kegelstumpfförmig ausgestaltet. Insbesondere eine kegelstumpfförmige Ausgestaltung, bei der sich der Durchmesser des Schutzelements in Richtung auf eine Deckenwand des Dampfkessels, die vom Füllstandssensor durchgriffen wird, erweitert, ist von Vorteil.

Günstigerweise umfasst der Dampfkessel eine Bodenwand, an der mindestens ein ringförmiges Heizelement angeordnet ist, und der Füllstandssensor sowie das Schutzelement sind in horizontaler Richtung versetzt zu dem mindestens einen Heizelement angeordnet. Bei einer derartigen Ausgestaltung ist der Füllstandssensor nicht etwa oberhalb des mindestens einen Heizelementes positioniert, sondern er ist versetzt zum Heizelement angeordnet. Dies hat zur Folge, dass die einen besonders hohen Energieeintrag aufweisenden Bodenwandbereiche nicht direkt unterhalb des Füllstandssensors und auch nicht unterhalb des Schutzelementes angeordnet sind. In diesen Bodenwandbereichen mit hohem Energieeintrag bilden sich verstärkt Luftblasen aus, die dann nach oben steigen. Da jedoch der Füllstandssensor und das Schutzelement in horizontaler Richtung versetzt zu diesen sehr heißen Bodenwandbereichen angeordnet sind, wird die Gefahr einer Fehlmessung des Füllstandes zusätzlich vermindert.

Es kann vorgesehen sein, dass der Füllstandssensor und das Schutzelement fluchtend zu einem zentralen Bodenwandbereich angeordnet sind, der von dem mindestens einen Heizelement ringförmig umgeben ist. Das mindestens eine Heizelement bildet einen Heizring aus und der Füllstandssensor ist ebenso wie das Schutzelement über einem zentralen Bodenwandbereich angeordnet, der vom Heizring umgeben ist.

Die Montage des Dampfreinigungsgerätes wird bei einer vorteilhaften Ausführungsform der Erfindung dadurch vereinfacht, dass der Dampfkessel ein Unterteil und ein Oberteil aufweist, zwischen denen das Schutzelement eingespannt ist. Das Oberteil und das Unterteil des Dampfkessels können beispielsweise miteinander verschraubt werden, nachdem zuvor das Schutzelement zwischen die beiden Kesselteile eingefügt wurde, so dass dann das Schutzelement zwischen dem Unterteil und dem Oberteil des Kessels festgelegt ist.

Günstigerweise ist an eine Bodenwand des Dampfkessels innenseitig mindestens eine Erhebung angeformt, auf der das Schutzelement aufsitzt. Die Erhebung definiert mit ihrer der Bodenwand abgewandten Oberseite einen Abstand zur Bodenwand. Das Schutzelement kann auf der Oberseite der mindestens einen Erhebung aufsitzen und nimmt dadurch ebenfalls einen Abstand zur Bodenwand ein. Die Erhebung kann beispielsweise in Form einer Stützrippe oder in Form eines Stützwulstes ausgestaltet sein.

Bei einer bevorzugten Ausgestaltung der Erfindung umfasst das Schutzelement eine geschlossene Umfangswand, die den Füllstandssensor in Umfangsrichtung umgibt, sowie eine der Bodenwand des Dampfkessels zugewandte erste stirnseitige Durchlassöffnung. Über die der Bodenwand zugewandte erste Durchlassöffnung kann Reinigungsflüssigkeit in den vom Schutzelement umgebenen Beruhigungsbereich des Dampfkessels eindringen. Die geschlossene Umfangwand schützt den Füllstandssensor vor Luftblasen und Schaum, die sich außerhalb des Beruhigungsbereiches innerhalb des Dampfkessels ausbilden und das Erfassen des Füllstandes der Reinigungsflüssigkeit im Dampfkessel erschweren.

Günstig ist es, wenn das Schutzelement auf seiner der Bodenwand abgewandten Stirnseite eine zweite Durchlassöffnung für Luft und Dampf aufweist. Über die der Bodenwand abgewandte Durchlassöffnung kann bei sich innerhalb des Schutzelements änderndem Flüssigkeitsspiegel ein Druckausgleich erfolgen.

Das Schutzelement kann beispielsweise als zylinder- oder kegelstumpfförmige Hülse ausgestaltet sein, deren Längsachse koaxial zur Längsachse des Füllstandssensors ausgerichtet ist und deren Stirnseiten offen sind und Durchlassöffnungen für Reinigungsflüssigkeit bzw. für Luft und Dampf ausbilden.

Der Dampfkessel weist einen Dampfauslass auf, über den der erzeugte Dampf abgegeben werden kann. Günstig ist es, wenn der Dampfauslass außerhalb des vom Schutzelement umgebenen Bereiches des Dampfkessels angeordnet ist. Dadurch wird die Gefahr verringert, dass sich innerhalb des Dampfkessels bildender Schaum in den vom Schutzelement umgebenen Beruhigungsbereich gelangt und die Messung des Füllstandes beeinträchtigt.

Um zu verhindern, dass beispielsweise Kalkreste oder sonstige Feststoffpartikel, die sich im Dampfkessel befinden, in den Dampfauslass gelangen, ist es von Vorteil, wenn der Dampfauslass innerhalb des Dampfkessels von einem Filter- oder Siebteil abgedeckt ist. Hierbei kann es sich beispielsweise um ein Lochblech oder um ein Drahtgewebe handeln.

Bei einer besonders vorteilhaften Ausführungsform bildet das Schutzelement eine Stütze aus, die das Filter- oder Siebteil innerhalb des Dampfkessels abstützt. Zusätzlich zu seiner Funktion, den Füllstandssensor vor Schaum und Luftblasen zu schützen, übernimmt das Schutzelement bei einer derartigen Ausgestaltung der Erfindung die Funktion, eine mechanische Stütze auszubilden für das Filter- oder Siebteil, das den Dampfauslass innerhalb des Dampfkessels abdeckt.

Zur Ausgestaltung des Füllstandssensors wurden bisher keine näheren Angaben gemacht. Bei einer vorteilhaften Ausführungsform weist der Füllstandssensor eine Elektrode auf. An die Elektrode kann eine elektrische Spannungsquelle angeschlossen werden zur Messung der elektrischen Leitfähigkeit zwischen der Elektrode und der Wand des Dampfkessels. Eine hohe elektrische Leitfähigkeit bedeutet, dass zwischen der Elektrode und der Wand des Dampfkessels über die Reinigungsflüssigkeit eine leitende elektrische Verbindung besteht, d. h. der Füllstandssensor taucht in die Reinigungsflüssigkeit ein, die somit einen verhältnismäßig hohen Füllstand aufweist. Eine geringe oder keine Leitfähigkeit bedeutet, dass zwischen der Elektrode und der Wand des Dampfkessels über die Reinigungsflüssigkeit keine leitende elektrische Verbindung besteht, d. h. der Füllstandssensor taucht nicht in die Reinigungsflüssigkeit ein, die somit einen Füllstand kleiner als die Lage des Füllstandssensors aufweist. Sinkt somit die elektrische Leitfähigkeit zwischen dem als Elektrode ausgebildeten Füllstandssensor und der Wand des Dampfkessels stark ab, so kann dies dahingehend interpretiert werden, dass der Füllstand der Flüssigkeit innerhalb des Dampfkessels einen unteren Grenzwert unterschreitet. Dies kann zur Folge haben, dass die Pumpe des Dampfreinigungsgerätes zur Befüllung des Dampfkessels aktiviert wird.

Die nachfolgende Beschreibung einer bevorzugten Ausführungsform der Erfindung dient im Zusammenhang mit der Zeichnung der näheren Erläuterung. Es zeigen:

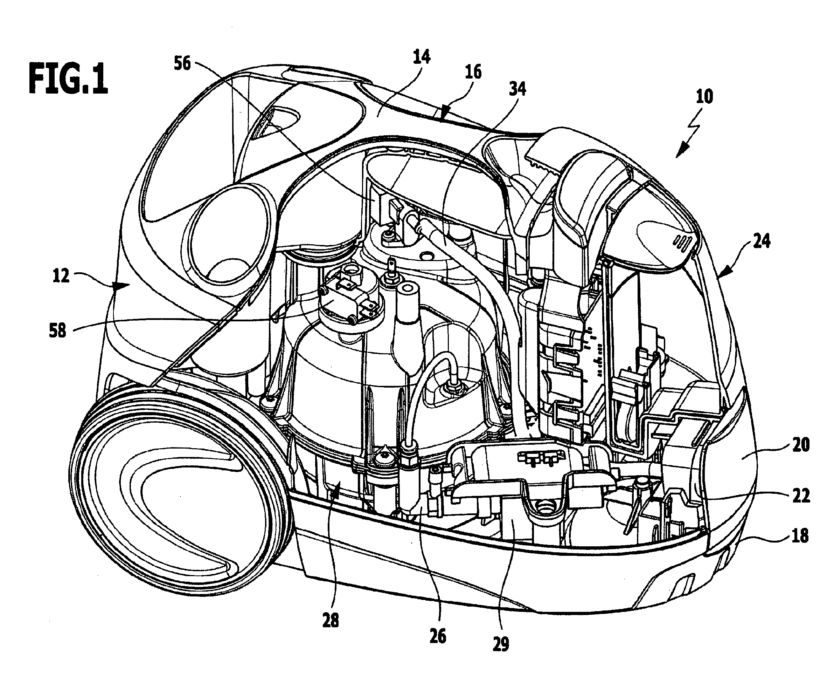

- Figur 1:: eine teilweise aufgetrennte perspektivische Seitenansicht eines Dampfreinigungsgerätes mit einem Dampfkessel, dem von einer Pumpe Reinigungsflüssigkeit aus einem Flüssigkeitstank zugeführt werden kann;
- Figur 2:: eine Seitenansicht des Dampfkessels;
- Figur 3:: eine Draufsicht des Dampfkessels und
- Figur 4:: eine Schnittansicht des Dampfkessels längs der Linie 4-4 in Figur 2.

In der Zeichnung ist schematisch ein insgesamt mit dem Bezugszeichen 10 belegtes tragbares Dampfreinigungsgerät dargestellt mit einem Gehäuse 12, das an seiner Oberseite 14 einen Tragegriff 16 ausbildet. An einer Stirnseite 18 des Gehäuses 12 ist eine Verschlussklappe 20 verschwenkbar gehalten, die in ihrer in der Zeichnung dargestellten Schließstellung einen Schlauchanschluss 22 abdeckt. Die Verschlussklappe 20 kann in eine Freigabestellung verschwenkt werden, in der der Schlauchanschluss 22 dem Benutzer zugänglich ist, so dass der Benutzer an den Schlauchanschluss 22 einen Dampfabgabeschlauch anschließen kann. Derartige Dampfabgabeschläuche sind bekannt und daher in der Zeichnung nicht dargestellt. An seinem dem Dampfreinigungsgerät 10 abgewandten freien Ende kann der Dampfabgabeschlauch in üblicher Weise eine Dampfabgabedüse tragen, insbesondere eine Bodendüse.

Oberhalb der Verschlussklappe 20 ist am Gehäuse 12 ein Flüssigkeitstank 24 abnehmbar gehalten, der mit eine Reinigungsflüssigkeit, vorzugsweise mit Wasser, befüllt werden kann. Die Reinigungsflüssigkeit kann aus dem Flüssigkeitstank 24 über eine Verbindungsleitung 26 einem vom Gehäuse 12 umgebenen, elektrisch beheizbaren Dampfkessel 28 zugeführt werden. Hierzu ist in die Verbindungsleitung 26 eine Pumpe 29 geschaltet. Flüssigkeit, die mittels der Pumpe 29 in den Dampfkessel 28 gefördert wurde, kann im Dampfkessel 28 verdampft und über ein Magnetventil 56 und eine Ausgangsleitung 34 zum Schlauchanschluss 22 geleitet werden, an den ein Dampfabgabeschlauch angeschlossen werden kann zum Aufbringen des Dampfes auf eine zu reinigende Fläche.

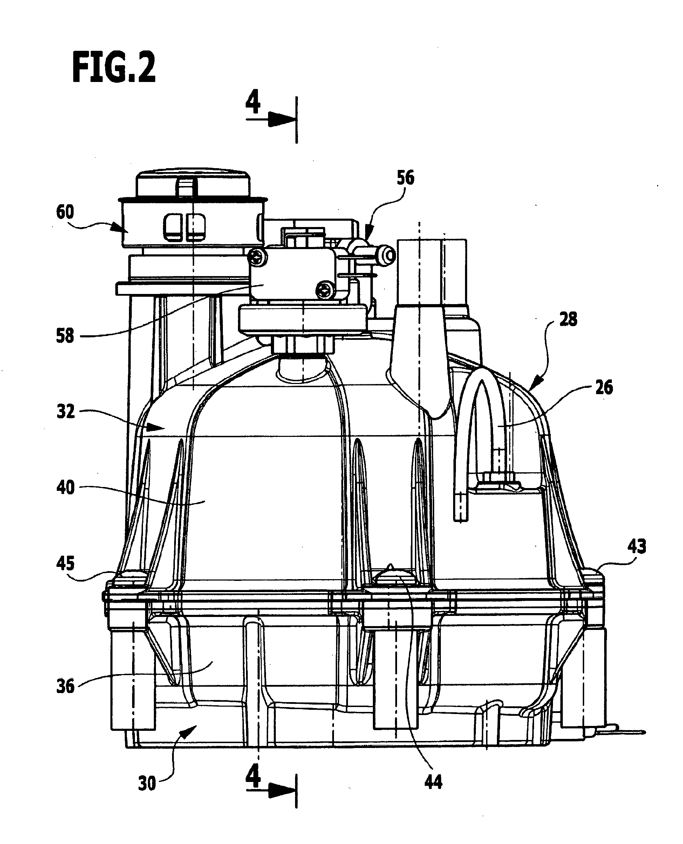

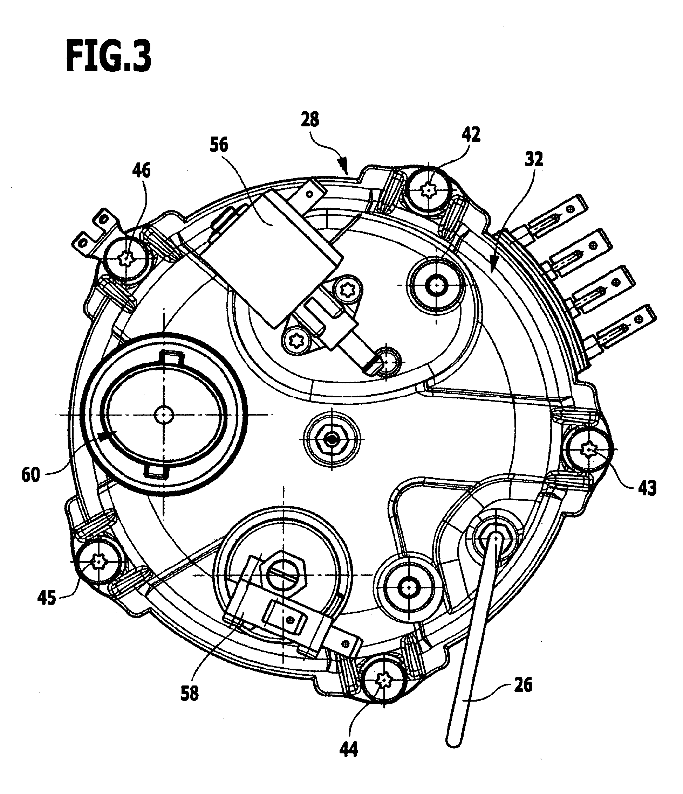

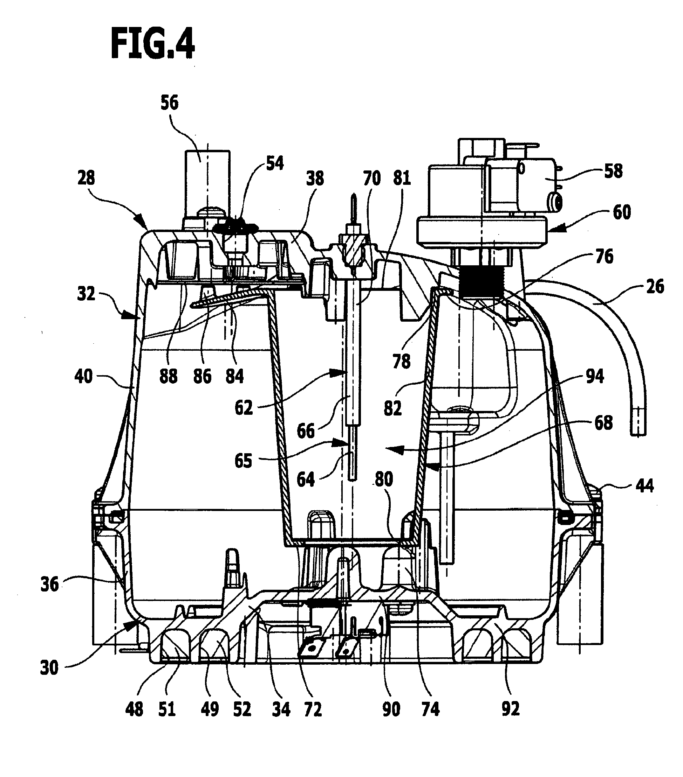

Der Dampfkessel 28 ist in den Figuren 2 bis 4 vergrößert dargestellt. Er umfasst ein Unterteil 30 und ein Oberteil 32, die miteinander verschraubt sind. Das Unterteil 30 ist wannenartig ausgebildet und umfasst eine Bodenwand 34, an die sich eine im Wesentlichen kreiszylindrische untere Seitenwand 36 anschließt. Das Oberteil 32 ist nach Art einer Haube ausgestaltet und umfasst eine Deckenwand 38, die von einer oberen Seitenwand 40 umgeben ist. Die obere Seitenwand 40 ist der unteren Seitenwand 36 zugewandt und mit der unteren Seitenwand 36 mit Hilfe von Verbindungsschrauben 42 bis 46 verschraubt, die in Umfangsrichtung in etwa gleichmäßigem Abstand zueinander angeordnet sind. Insgesamt weist der Dampfkessel 28 eine im Wesentlichen zylindrische, oberseitig kugelförmig abgerundete Gestalt auf.

Unterseitig sind in die Bodenwand 34 eine äußere Ringnut 48 und eine innere Ringnut 49 eingeformt. Die äußere Ringnut 48 nimmt einen äußeren ringförmigen Heizleiter 51 auf, und die innere Ringnut 49 nimmt einen inneren ringförmigen Heizleiter 52 auf. Mittels der beiden Heizleiter kann der Dampfkessel 28 erwärmt werden, so dass im Dampfkessel 28 befindliche Reinigungsflüssigkeit verdampft. Der Dampf kann über einen die Deckenwand 38 in einem seitlichen Randbereich durchgreifenden Dampfauslass 54 abgegeben werden. Außenseitig ist an den Dampfauslass 54 das Magnetventil 56 angeschlossen, von dem aus die Ausgangsleitung 34 zum Schlauchanschluss 22 führt. Durch Betätigen eines in der Zeichnung nicht dargestellten Schalters, der beispielsweise an der Dampfabgabedüse angeordnet sein kann, kann das Magnetventil 56 bedarfsweise geöffnet und geschlossen werden, so dass der Benutzer die Dampfabgabe steuern kann.

Der sich innerhalb des Dampfkessels 28 ausbildende Dampfdruck kann mit Hilfe eines Druckschalters 58 erfasst werden, der an der Außenseite der Deckenwand 38 angeordnet ist und über eine in der Zeichnung nicht dargestellte Durchbrechung der Deckenwand 38 mit dem Innenraum des Dampfkessels 28 in Verbindung steht. Mit Hilfe des Druckschalters 58 kann in Abhängigkeit des innerhalb des Dampfkessels 28 herrschenden Dampfdruckes die Heizung des Dampfkessels 28 ein- und ausgeschaltet werden, indem der äußere Heizleiter 51 und der innere Heizleiter 52 mit Heizstrom beaufschlagt werden. Erreicht der Druck im Dampfkessel 28 einen unteren Grenzwert, so schaltet der Druckschalter 58 die Heizung des Dampfkessels 28 ein, erreicht der Druck innerhalb des Dampfkessels 28 einen oberen Grenzwert, so schaltet der Druckschalter 58 die Heizung des Dampfkessels 28 wieder aus.

In Umfangsrichtung ungefähr mittig zwischen dem Magnetventil 56 und dem Druckschalter 58 ist an der Außenseite der Deckenwand 38 ein Sicherheitsventil 60 angeordnet, das über einen weiteren Durchlass, der die Deckenwand 38 durchgreift, mit dem Innenraum des Dampfkessels 28 in Strömungsverbindung steht. Das Sicherheitsventil 60 öffnet, wenn sich innerhalb des Dampfkessels 28 ein unzulässig hoher Dampfdruck ausbildet.

Die Deckenwand 38 wird mittig von einem Füllstandssensor 62 durchgriffen, der in den Innenraum des Dampfkessels 28 eintaucht und eine Elektrode 64 aufweist, die bis auf einen freien Endbereich 65 von einem an der Elektrode 64 unmittelbar anliegenden Schutzmantel 66 umgeben ist.

Innerhalb des Dampfkessels 28 ist ein hülsenförmiges Schutzelement 68 angeordnet, das den Füllstandssensor 62 in Umfangsrichtung umgibt, wobei es sowohl in radialer Richtung als auch in Längsrichtung bezogen auf eine Längsachse 70 des Füllstandssensors 62 einen Abstand zum Füllstandssensor 62 einnimmt, der ungefähr ein Achtel bis ein Sechstel des Durchmessers des Dampfkessels 28 beträgt.

Das Schutzelement 68 ist zwischen das Unterteil 30 und das Oberteil 32 des Dampfkessels 28 eingespannt. Mit einer der Bodenwand 34 zugewandten Stirnwand 72 stützt sich das Schutzelement 68 an innenseitig an die Bodenwand 34 angeformten Stützrippen 74 ab, und mit einem radial nach außen weisenden Stützflansch 76 stützt sich das Schutzelement 68 an einer innenseitig an die Deckenwand 38 angeformten Stufe 78 ab.

Das Schutzelement 68 weist eine erste Durchlassöffnung 80 auf, die der Bodenwand 34 zugewandt an der Stirnwand 72 angeordnet ist. Zwischen der Stirnwand 72 und dem Stützflansch 76 erstreckt sich eine geschlossene Umfangswand 82 des Schutzelementes 68, die keinerlei Durchlassöffnungen aufweist und die sich ausgehend von der Stirnwand 72 in Richtung auf den Stützflansch 76 konisch erweitert. Der Stützflansch 76 umgibt eine zweite Durchlassöffnung 81, die der Bodenwand 34 abgewandt ist und einen Abstand von vorzugsweise mindestens 1 mm, insbesondere einen Abstand von 3 mm bis 10 mm, beispielsweise einen Abstand von 4 mm bis 5 mm zur Deckenwand 38 einnimmt. Unterhalb des Dampfauslasses 54 erweitert sich der Stützflansch 76 über einen Teilbereich seines Außenumfangs in radialer Richtung und bildet ein Schutzschild 84 aus, das den Dampfauslass 54 innerhalb des Dampfkessels 28 unter Aufrechterhaltung eines Abstands abdeckt. An seiner dem Dampfauslass 54 zugewandten Oberseite weist der Schutzschild 84 mehrere Stütznoppen 86 auf, die ein Filter- oder Siebteil abstützen, das in der dargestellten Ausführungsform als Drahtgitter 88 ausgebildet ist und zwischen dem Schutzschild 84 und dem Dampfauslass 54 angeordnet ist. Das Drahtgitter 88 deckt den Dampfauslass 54 innerhalb des Dampfkessels 28 ab.

Der Füllstandssensor 62 und das koaxial zu dessen Längsachse 70 ausgerichtete Schutzelement 68 sind oberhalb eines zentralen Bodenbereichs 90 angeordnet, der von einem ringförmigen Bodenheizbereich 92 umgeben ist. Der Bodenheizbereich 92 wird durch den Verlauf der beiden Heizleiter 51 und 52 definiert und erfährt die größte Erwärmung, wenn die Heizung des Dampfkessels 28 in Betrieb ist. Am Bodenheizbereich 92 bilden sich daher Luftblasen in der im Dampfkessel 28 befindlichen Flüssigkeit aus, wenn der Dampfkessel beheizt wird. Die Luftblasen steigen dann nach oben, so dass sich innerhalb des Dampfkessels 28 Schaum ausbildet. Die Luftblasen sowie der Schaum befinden sich jedoch außerhalb des vom Schutzelement 68 umgebenen Beruhigungsbereiches 94, der den Füllstandssensor 62 umgibt und über dem zentralen Bodenbereich positioniert ist. Flüssigkeit kann über die erste Durchlassöffnung 80 in den Beruhigungsbereich 94 eindringen und ein Druckausgleich kann über die zweite Durchlassöffnung 81 erfolgen, so dass der Füllstand der Flüssigkeit im Beruhigungsbereich 94 identisch ist mit dem Füllstand der Flüssigkeit außerhalb des Beruhigungsbereiches 94. Da sich innerhalb des Beruhigungsbereiches 94 aber praktisch kein Schaum und allenfalls nur wenige Luftblasen befinden, kann der Füllstand innerhalb des Beruhigungsbereiches 94 vom Füllstandssensor 62 zuverlässig erfasst werden. Hierzu kann die elektrische Leitfähigkeit zwischen der Elektrode 64 und beispielsweise dem zentralen Bodenbereich 90 erfasst werden. Eine hohe Leitfähigkeit bedeutet, dass sich zwischen dem freien Endbereich 65 der Elektrode 64 und dem Bodenbereich 90 Flüssigkeit befindet, eine niedrige oder keine Leitfähigkeit dagegen bedeutet, dass das Flüssigkeitsniveau im Beruhigungsbereich 94 das freie Ende der Elektrode 64 nicht erreicht, so dass die Leitfähigkeit zwischen dem freien Endbereich 65 der Elektrode 64 und dem Bodenbereich 90 durch die sich dazwischen befindliche Luft definiert wird.

Fällt die Leitfähigkeit zwischen der Elektrode 64 und dem Bodenbereich 90 stark ab, so hat der Füllstand der Flüssigkeit im Dampfkessel 28 einen unteren Grenzwert erreicht. Es wird dann die Pumpe 29 eingeschaltet, so dass aus dem Flüssigkeitstank 24 Reinigungsflüssigkeit in den Dampfkessel 28 gepumpt wird und sich daraufhin ein höherer Füllstand im Dampfkessel 28 einstellt. Durch die Bereitstellung des Schutzelements 68, das den Füllstandssensor 62 in Umfangsrichtung umgibt und einen oberhalb des zentralen Bodenbereichs 90 angeordneten Beruhigungsbereich 94 definiert, der über die erste Durchlassöffnung 80 und die zweite Durchlassöffnung 81 mit dem restlichen Bereich des Innenraums des Dampfkessels 28 in Strömungsverbindung steht, kann der Füllstand innerhalb des Dampfkessels auch dann zuverlässig erfasst werden, wenn die beiden Heizleiter 51 und 52 mit Strom beaufschlagt werden und daher der ringförmige Bodenheizbereich 92 eine starke Erwärmung erfährt.

## Patentansprüche

1. Dampfreinigungsgerät mit einem Flüssigkeitstank (24) für eine Reinigungsflüssigkeit und mit einem elektrisch beheizbaren Dampfkessel (28) zum Erzeugen von Dampf, der auf eine zu reinigende Fläche aufbringbar ist, wobei Flüssigkeit aus dem Flüssigkeitstank (24) mittels einer Pumpe (29) in den Dampfkessel (28) förderbar ist in Abhängigkeit vom Füllstand der Flüssigkeit im Dampfkessel (28), wobei der Füllstand mittels eines im Dampfkessel (28) angeordneten Füllstandssensors (62) erfassbar ist, und wobei der Füllstandssensor (62) im Dampfkessel (28) von einem Schutzelement (68) umgeben ist, das mindestens eine Durchlassöffnung (80, 81) aufweist, **dadurch gekennzeichnet, dass** das Schutzelement (68) einen Schutzschild (84) aufweist, der einen Dampfauslass (54) des Dampfkessels (28) innenseitig abdeckt.

2. Dampfreinigungsgerät nach Anspruch 1, **dadurch gekennzeichnet, dass** das Schutzelement (68) mindestens eine erste Durchlassöffnung (80) für Reinigungsflüssigkeit und mindestens eine zweite Durchlassöffnung (81) für Luft und Dampf aufweist.

3. Dampfreinigungsgerät nach Anspruch 1 oder 2, **dadurch gekennzeichnet, dass** mindestens eine erste Durchlassöffnung (80) für Reinigungsflüssigkeit an einer Seite des Schutzelements (68) angeordnet ist, die der Bodenwand (34) des Dampfkessels (28) zugewandt ist.

4. Dampfreinigungsgerät nach Anspruch 1, 2 oder 3, **dadurch gekennzeichnet, dass** mindestens eine zweite Durchlassöffnung (81) für Luft und Dampf an einer Seite des Schutzelements (68) angeordnet ist, die einer Bodenwand (34) des Dampfkessels (28) abgewandt ist.

5. Dampfreinigungsgerät nach einem der voranstehenden Ansprüche,
**dadurch gekennzeichnet, dass** das Schutzelement (68) einen Abstand zum Füllstandssensor (62) einnimmt.

6. Dampfreinigungsgerät nach einem der voranstehenden Ansprüche,
**dadurch gekennzeichnet, dass** das Schutzelement (68) zylinder- oder kegelstumpfförmig ausgestaltet ist.

7. Dampfreinigungsgerät nach einem der voranstehenden Ansprüche,
**dadurch gekennzeichnet, dass** der Dampfkessel (28) eine Bodenwand (34) aufweist, an der mindestens ein ringförmiges Heizelement (51, 52) angeordnet ist, und dass der Füllstandssensor (62) und das Schutzelement (68) in horizontaler Richtung versetzt zu dem mindestens einen Heizelement (51, 52) angeordnet sind.

8. Dampfreinigungsgerät nach Anspruch 7, **dadurch gekennzeichnet, dass** der Füllstandssensor (62) und das Schutzelement (68) fluchtend zu einem zentralen Bodenwandbereich (90) angeordnet sind, der von dem mindestens einen Heizelement (51, 52) ringförmig umgeben ist.

9. Dampfreinigungsgerät nach einem der voranstehenden Ansprüche,
**dadurch gekennzeichnet, dass** der Dampfkessel (28) ein Unterteil (30) und ein Oberteil (32) aufweist, zwischen denen das Schutzelement (68) eingespannt ist.

10. Dampfreinigungsgerät nach einem der voranstehenden Ansprüche,
**dadurch gekennzeichnet, dass** an eine Bodenwand (34) des Dampfkessels (28) innenseitig mindestens eine Erhebung (74) angeformt ist, auf der das Schutzelement (68) aufsitzt.

11. Dampfreinigungsgerät nach einem der voranstehenden Ansprüche,
**dadurch gekennzeichnet, dass** das Schutzelement (68) eine geschlossene Umfangswand (82) aufweist, die den Füllstandssensor (62) in Umfangsrichtung umgibt, sowie eine der Bodenwand (34) des Dampfkessels (28) zugewandte erste stirnseitige Durchlassöffnung (80).

12. Dampfreinigungsgerät nach Anspruch 11, **dadurch gekennzeichnet, dass** das Schutzelement (68) eine der Bodenwand (34) des Dampfkessels (28) abgewandte zweite stirnseitige Durchlassöffnung (81) aufweist.

13. Dampfreinigungsgerät nach einem der voranstehenden Ansprüche,
**dadurch gekennzeichnet, dass** der Dampfauslass (54) außerhalb des vom Schutzelement (68) umgebenen Bereichs (94) des Dampfkessels (28) angeordnet ist.

14. Dampfreinigungsgerät nach einem der voranstehenden Ansprüche,
**dadurch gekennzeichnet, dass** das Schutzelement (68) eine Stütze ausbildet für ein dampfdurchlässiges Filter- oder Siebteil (88), das den Dampfauslass (54) des Dampfkessels (28) innenseitig abdeckt.

15. Dampfreinigungsgerät nach einem der voranstehenden Ansprüche,
**dadurch gekennzeichnet, dass** der Füllstandssensor (62) eine Elektrode (64) aufweist.

## Claims

1. Steam cleaner having a liquid tank (24) for a cleaning liquid and having an electrically heatable steam boiler (28) for generating steam which can be applied onto a surface to be cleaned, wherein liquid can be fed from the liquid tank (24) into the steam boiler (28) by means of a pump (29) in dependence on the filling level of the liquid in the steam boiler (28), wherein the filling level can be detected by means of a filling level sensor (62) disposed in the steam boiler (28), and wherein the filling level sensor (62) in the steam boiler (28) is surrounded by a protective element (68) which has at least one through-opening (80, 81), **characterized in that** the protective element (68) has a protective shield (84) which covers a steam outlet (54) of the steam boiler (28) on the inner side.

2. Steam cleaner according to claim 1, **characterized in that** the protective element (68) has at least one first through-opening (80) for cleaning liquid and at least one second through-opening (81) for air and steam.

3. Steam cleaner according to claim 1 or 2, **characterized in that** at least one first through-opening (80) for cleaning liquid is disposed on a side of the protective element (68), which side faces the bottom wall (34) of the steam boiler (28).

4. Steam cleaner according to claim 1, 2 or 3, **characterized in that** at least one second through-opening (81) for air and steam is disposed on a side of the protective element (68), which side faces away from a bottom wall (34) of the steam boiler (28).

5. Steam cleaner according to any one of the preceding claims, **characterized in that** the protective element (68) is spaced apart from the filling level sensor (62).

6. Steam cleaner according to any one of the preceding claims, **characterized in that** the protective element (68) is configured in the shape of a cylinder or a truncated cone.

7. Steam cleaner according to any one of the preceding claims, **characterized in that** the steam boiler (28) has a bottom wall (34) on which at least one annular heating element (51, 52) is disposed, and **in that** the filling level sensor (62) and the protective element (68) are offset in the horizontal direction relative to the at least one heating element (51, 52).

8. Steam cleaner according to claim 7, **characterized in that** the filling level sensor (62) and the protective element (68) are disposed aligned with a central bottom wall region (90) which is annularly surrounded by the at least one heating element (51, 52).

9. Steam cleaner according to any one of the preceding claims, **characterized in that** the steam boiler (28) has a lower part (30) and an upper part (32) between which the protective element (68) is clamped.

10. Steam cleaner according to any one of the preceding claims, **characterized in that** there is moulded on the inner side of a bottom wall (34) of the steam boiler (28) at least one elevation (74) on which the protective element (68) is seated.

11. Steam cleaner according to any one of the preceding claims, **characterized in that** the protective element (68) has a closed peripheral wall (82) which surrounds the filling level sensor (62) in the peripheral direction, and a first end-face through-opening (80) which faces the bottom wall (34) of the steam boiler (28).

12. Steam cleaner according to claim 11, **characterized in that** the protective element (68) has a second end-face through-opening (81) which faces away from the bottom wall (34) of the steam boiler (28).

13. Steam cleaner according to any one of the preceding claims, **characterized in that** the steam outlet (54) is disposed outside of that region (94) of the steam boiler (28) which is surrounded by the protective element (68).

14. Steam cleaner according to any one of the preceding claims, **characterized in that** the protective element (68) forms a support for a steam-permeable filter or screen part (88) which covers the steam outlet (54) of the steam boiler (28) on the inner side.

15. Steam cleaner according to any one of the preceding claims, **characterized in that** the filling level sensor (62) has an electrode (64).

## Revendications

1. Appareil de nettoyage à vapeur comprenant un réservoir de liquide (24) pour un liquide de nettoyage et un générateur de vapeur (28) pouvant être chauffé électriquement pour produire de la vapeur destinée à être appliquée sur une surface à nettoyer, du liquide pouvant être refoulé du réservoir de liquide (24), au moyen d'une pompe (29), dans le générateur de vapeur (28) en fonction du niveau de remplissage du liquide dans le générateur de vapeur (28), et le niveau de remplissage pouvant être détecté au moyen d'un capteur de niveau de remplissage (62) disposé dans le générateur de vapeur (28), et le capteur de niveau de remplissage (62) dans le générateur de vapeur (28) étant entouré d'un élément de protection (68) qui présente au moins une ouverture traversante (80, 81), **caractérisé en ce que** l'élément de protection (68) présente un écran de protection (84) recouvrant côté intérieur une sortie de vapeur (54) du générateur de vapeur (28).

2. Appareil de nettoyage à vapeur selon la revendication 1, **caractérisé en ce que** l'élément de protection (68) comprend au moins une première ouverture traversante (80) pour le liquide de nettoyage et au moins une seconde ouverture traversante (81) pour l'air et la vapeur.

3. Appareil de nettoyage à vapeur selon la revendication 1 ou 2, **caractérisé en ce que** la ou les premières ouvertures traversantes (80) pour le liquide de nettoyage sont ménagées sur une face de l'élément de protection (68) tournée vers la paroi inférieure (34) du générateur de vapeur (28).

4. Appareil de nettoyage à vapeur selon la revendication 1, 2 ou 3, **caractérisé en ce qu'**au moins une seconde ouverture traversante (81) pour l'air et la vapeur est ménagée sur une face de l'élément de protection (68) opposée à une paroi inférieure (34) du générateur de vapeur (28).

5. Appareil de nettoyage à vapeur selon l'une quelconque des revendications précédentes, **caractérisé en ce que** l'élément de protection (68) est distant du capteur de niveau de remplissage (62).

6. Appareil de nettoyage à vapeur selon l'une quelconque des revendications précédentes, **caractérisé en ce que** l'élément de protection (68) est de forme cylindrique ou tronconique.

7. Appareil de nettoyage à vapeur selon l'une quelconque des revendications précédentes, **caractérisé en ce que** le générateur de vapeur (28) présente une paroi inférieur (34) sur laquelle est disposé au moins un élément chauffant annulaire (51, 52), et **en ce que** le capteur de niveau de remplissage (62) et l'élément de protection (68) sont disposés dans la direction horizontale de manière décalée par rapport au ou aux éléments de chauffage (51, 52).

8. Appareil de nettoyage à vapeur selon la revendication 7, **caractérisé en ce que** le capteur de niveau de remplissage (62) et 1"élément de protection (68) sont disposés en alignement avec une zone de paroi inférieure centrale (90) entourée de manière annulaire du ou des éléments chauffants (51, 52).

9. Appareil de nettoyage à vapeur selon l'une quelconque des revendications précédentes, **caractérisé en ce que** le générateur de vapeur (28) comprend une partie inférieure (30) et une partie supérieure (32) entre lesquelles l'élément de protection (68) est monté.

10. Appareil de nettoyage à vapeur selon l'une quelconque des revendications précédentes, **caractérisé en ce qu'**au moins un bossage (74), sur lequel l'élément de protection (68) repose, est formé côté intérieur sur une paroi inférieure (34) du générateur de vapeur (28).

11. Appareil de nettoyage à vapeur selon l'une quelconque des revendications précédentes, **caractérisé en ce que** l'élément de protection (68) présente une paroi circonférentielle fermée (82) entourant le capteur de niveau de remplissage (62) dans la direction circonférentielle, ainsi qu'une première ouverture traversante frontale (80) tournée vers la paroi inférieure (34) du générateur de vapeur (28).

12. Appareil de nettoyage à vapeur selon la revendication 11, **caractérisé en ce que** l'élément de protection (68) présente une seconde ouverture traversante frontale (81) opposée à la paroi inférieure (34) du générateur de vapeur (28).

13. Appareil de nettoyage à vapeur selon l'une quelconque des revendications précédentes, **caractérisé en ce que** la sortie de vapeur (54) est disposée à l'extérieur de la zone (94) du générateur de vapeur (28) entourée par l'élément de protection (68).

14. Appareil de nettoyage à vapeur selon l'une quelconque des revendications précédentes, **caractérisé en ce que** l'élément de protection (68) forme un appui pour une partie de filtrage ou de tamisage (68) laissant passer la vapeur, cette partie recouvrant côté intérieur la sortie de vapeur (54) du générateur de vapeur (28).

15. Appareil de nettoyage à vapeur selon l'une quelconque des revendications précédentes, **caractérisé en ce que** le capteur de niveau de remplissage (62) comprend une électrode (64).
